(19) **Europäisches Patentamt**
**European Patent Office**
**Office européen des brevets**

(11) **EP 4 283 698 A1**

(12) # EUROPEAN PATENT APPLICATION

(43) Date of publication:
**29.11.2023 Bulletin 2023/48**

(21) Application number: **23174746.0**

(22) Date of filing: **23.05.2023**

(51) International Patent Classification (IPC):
*H01M 4/04* *(2006.01)* *B29C 43/24* *(2006.01)*
*H01M 4/139* *(2010.01)* *H01M 4/62* *(2006.01)*
*H01M 10/058* *(2010.01)* *B02C 19/00* *(2006.01)*
*B02C 17/00* *(2006.01)*

(52) Cooperative Patent Classification (CPC):
**H01M 4/0435; B29C 43/24; H01M 4/0404;**
**H01M 4/139; H01M 4/622;** B02C 17/00;
B02C 19/00; H01M 10/058

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.05.2022 KR 20220062783**

(71) Applicant: **SK On Co., Ltd.**
**Seoul 03161 (KR)**

(72) Inventors:
• **KIM, Young Jun**
**34124 Daejeon (KR)**
• **KANG, Yong Hee**
**34124 Daejeon (KR)**
• **LEE, Dong Hoon**
**34124 Daejeon (KR)**
• **LIM, Hyo Sung**
**34124 Daejeon (KR)**

(74) Representative: **Prüfer & Partner mbB**
**Patentanwälte · Rechtsanwälte**
**Sohnckestraße 12**
**81479 München (DE)**

(54) **METHOD AND APPARATUS FOR PREPARING DRY ELECTRODE SHEET FOR SECONDARY BATTERY, DRY ELECTRODE SHEET FOR SECONDARY BATTERY, ELECTRODE FOR SECONDARY BATTERY, AND SECONDARY BATTERY**

(57) A method of manufacturing a dry electrode sheet for a secondary battery includes providing a dry electrode composition including an electrode active material and a binder, kneading the dry electrode composition, and manufacturing an electrode sheet by calendering the kneaded dry electrode composition.

FIG. 3

EP 4 283 698 A1

**Description**

**BACKGROUND**

**1. FIELD**

The present disclosure relates to a method of manufacturing a dry electrode sheet for a secondary battery, a dry electrode sheet for a secondary battery, an electrode for a secondary battery, and a secondary battery.

**2. DESCRIPTION OF RELATED ART**

Lithium secondary batteries are used not only as an energy source for mobile devices, but also as a power source for electric vehicles (EVs) and hybrid electric vehicles (HEVs), and demand therefor is also continuously increasing.

The manufacturing process of a lithium secondary battery is largely divided into three steps of an electrode (electrode plate) process, an assembly process, and a conversion (activation) process. The electrode process is divided into a mixing (active material mixing) process of preparing an electrode mixture slurry by mixing the electrode composition including the active material with a solvent, a coating process of coating the electrode mixture slurry on a current collector to form a mixture layer, a drying process of removing the solvent in the mixture layer, a rolling process of pressing the mixture layer to have a predetermined thickness, and a slitting process to manufacture electrode tabs by cutting uncoated areas.

In general, the electrode of a lithium secondary battery is manufactured by preparing an electrode active material slurry by dispersing an electrode mixture including an electrode active material and a binder in a solvent such as water or NMP, and applying the slurry to a current collector and then drying the same.

In the drying process, the solvent contained in the electrode mixture slurry is evaporated, and in the drying process of evaporating the solvent, defects such as pinholes or cracks may occur in the previously formed electrode mixture layer.

In addition, since the inside and outside of the electrode mixture layer may not be uniformly dried, a migration phenomenon in which particles float together due to a difference in the evaporation rate of the solvent may occur, for example, particles such as a binder from the area to be dried first move along with the evaporating solvent and float to the surface, causing formation of a gap between the area and the part that dries relatively later, and thus, there may be a problem of deterioration of electrode quality.

In order to prevent this problem, a technology for controlling the evaporation rate of the solvent while uniformly drying the inside and outside of the electrode mixture layer has been developed. However, drying devices applied to these technologies are significantly expensive and require considerable cost and time for operation, and thus, there are disadvantages in terms of manufacturing process.

On the other hand, a dry electrode manufacturing method has recently been proposed to improve electrode quality deterioration and manufacturing processability problems. In the dry electrode manufacturing method, since the electrode active material, binder, and the like are not dissolved in the solvent, the drying process may be omitted. The dry electrode manufactured in this manner has a problem in that the electrode does not maintain the sheet shape, such as cracks in the electrode sheet manufactured due to insufficient tensile strength.

Therefore, in the manufacturing of electrodes, there is a high need for a technology capable of securing the tensile strength of the electrode while improving the quality of the electrode and improving the manufacturing process because the migration of the binder does not occur.

**SUMMARY**

An aspect of the present disclosure is to provide a method of manufacturing a dry electrode sheet, not requiring a drying process.

An aspect of the present disclosure is to provide a method of manufacturing a dry electrode sheet, in which the number of calendering processes through calender rolls to manufacture the dry electrode sheet is reduced and tensile strength of the manufactured electrode sheet is improved.

An aspect of the present disclosure is to provide a dry electrode sheet manufactured using the above method and having improved tensile strength, an electrode including the same, and a secondary battery.

According to an aspect of the present disclosure, a method of manufacturing a dry electrode sheet for a secondary battery includes providing a dry electrode composition including an electrode active material and a binder; kneading the dry electrode composition; and manufacturing an electrode sheet by calendering the kneaded dry electrode composition.

The binder may be fibrous by the kneading.

The kneading may be performed by applying heat and shear pressure.

The kneading may be performed at a temperature of 30 to 200°C.

The kneading may be performed at a rotation speed of 20 to 50 rpm.

The kneading may be performed for 1 to 10 minutes.

The binder may be a particle phase of a fiber bundle in which fibers are agglomerated.

The binder may be at least one selected from the group consisting of polytetrafluoroethylene, polyethylene oxide, polyvinylpyrrolidone, polyvinyl alcohol, and cellulose derivatives.

The binder may be included in an amount of 1 to 5% by weight based on 100% by weight of the dry electrode composition.

The dry electrode composition may further include at least one selected from the group consisting of a conductive material and a particulate-phase binder.

The calendering may be performed by a calender roll including at least a first roll, a second roll, and a third roll.

In the calendaring, a first electrode sheet may be prepared by injecting the dry electrode composition between a first roll and a second roll, and the electrode sheet may be manufactured by injecting the first electrode sheet between the second roll and a third roll.

The calendering may be performed at a temperature of 50 to 200°C.

The first roll and the second roll, and the second roll and the third roll, may have a gap of 100 to 500 um between the rolls.

The calendering may be performed at a temperature of 50 to 200°C.

An operation of calendering the prepared electrode sheet may be further included.

The operation of calendering the electrode sheet may be repeated 20 times or less.

According to an aspect of the present disclosure, a dry electrode sheet for a secondary battery manufactured by the above manufacturing method is provided.

According to an aspect of the present disclosure, an electrode sheet for a secondary battery including an electrode active material and a binder is provided. The binder has a fibrous shape.

The electrode sheet may have a tensile strength of 0.50 N/mm$^2$ or more.

The electrode sheet may have an electrode density of 2.5 g/cc or more.

The electrode sheet may have a thickness of 100 to 500 $\mu$m.

The binder may be at least one selected from the group consisting of polytetrafluoroethylene, polyethylene oxide, polyvinylpyrrolidone, polyvinyl alcohol, and cellulose derivatives.

According to an aspect of the present disclosure, an electrode for a secondary battery including a current collector and the electrode sheet for a secondary battery as described above on the current collector is provided.

The electrode may be a negative electrode or a positive electrode.

According to an aspect of the present disclosure, a secondary battery is characterized in that an electrode current collector including a positive electrode, a separator, and a negative electrode, and an electrolyte solution are accommodated in a battery case and sealed. At least one of the positive electrode and the negative electrode is the electrode as described above.

## BRIEF DESCRIPTION OF DRAWINGS

The above and other aspects, features, and advantages of the present disclosure will be more clearly understood from the following detailed description, taken in conjunction with the accompanying drawings, in which:

FIG. 1 is a photograph illustrating a dry electrode composition according to an embodiment;

FIG. 2 is an image of a binder included in the dry electrode composition of FIG. 1, captured with an electron microscope, illustrating that it is not fibrous;

FIG. 3 is an image of the dry electrode composition after kneading in Example 1, captured with an electron microscope, and is an image illustrating that the binder is fibrous by kneading;

FIG. 4 schematically illustrates a calender roll used for manufacturing an electrode sheet in the present disclosure; and

FIG. 5 is an image of a dry electrode sheet for a secondary battery prepared by passing the dry electrode composition kneaded in Example 1 through a calender roll.

## DETAILED DESCRIPTION

Hereinafter, embodiments of the present disclosure will be described. However, the embodiments may be modified in various forms, and the scope of the present disclosure is not limited to the embodiments described below.

According to an embodiment, a method of manufacturing a dry electrode sheet for a secondary battery includes providing a dry electrode composition including an electrode active material and a binder, kneading the dry electrode composition, and manufacturing an electrode sheet by calendering the kneaded dry electrode composition.

The dry electrode composition may include an electrode active material and a binder, and may include a small amount of a solvent if necessary. The binder may be evenly distributed among the electrode active materials by mixing the dry electrode composition including the powdery components, not containing the solvent, using a device such as a blender or the like.

The method of manufacturing a dry electrode sheet for a secondary battery according to an embodiment may be applied to both manufacturing a positive electrode sheet and a negative electrode sheet. Accordingly, the electrode active material may be a positive electrode active material or a negative electrode active material.

For example, when an electrode to be manufactured is a negative electrode, the negative electrode active material may be a carbon-based negative electrode active material. The carbon-based negative electrode active material may be suitably used in the present disclosure as long as it is commonly used in the manufacture of a negative electrode of a secondary battery, and although not particularly limited, the carbon-based negative electrode active material may be artificial graphite, natural graphite, or a mixture of artificial graphite and natural graphite, and may be artificial graphite. Artificial graphite may further improve the dispersibility of the slurry, and may improve the lifespan and high-temperature storage characteristics.

The shape of the artificial graphite or natural graphite may be amorphous, plate-like, flake-like, spherical, fibrous, or combinations thereof. In addition, when mixing and using the artificial graphite and natural graphite, the mixing ratio may be 70:30 to 95:5 by weight.

The negative electrode active material may be used without particular limitation as long as it has a shape capable of intercalating and deintercalating lithium ions, and in terms of improving the function of the negative electrode active material for a lithium secondary battery, an aspect ratio may normally be 20 or more.

In addition, the negative electrode active material may further include at least one of a silicon (Si)-based negative electrode active material, a tin (Sn) -based negative electrode active material, or a lithium vanadium oxide negative electrode active material together with the carbon-based negative electrode active material. When the negative electrode active material further includes the same, it may be included in the range of 1 to 50% by weight based on the total weight of the negative electrode active material.

The Si-based negative electrode active material may be Si, a Si-C composite, $SiOx$ $(0<x<2)$, or a Si-Q alloy. In the Si-Q alloy, Q may be an element selected from the group consisting of alkali metals, alkaline earth metals, Group 13 elements, Group 14 elements, Group 15 elements, Group 16 elements, transition metals, rare earth elements and combinations thereof, other than Si, and in detail, may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

In general, as a negative electrode active material, a Si-based negative electrode active material is known to have a large volume change characteristic. In general, a silicon-based negative electrode active material may be added together with a carbon-based negative electrode active material such as graphite, and at this time, carbon nanotubes may be included as a conductive material to prevent swelling due to volume expansion of the silicon-based negative electrode active material.

The Sn-based negative electrode active material may be Sn, $SnO2$, or Sn-R alloy. In the Sn-R alloy, R may be an element selected from the group consisting of alkali metals, alkaline earth metals, group 13 elements, group 14 elements, group 15 elements, group 16 elements, transition metals, rare earth elements, and combinations thereof, other than Sn and Si, and in detail, may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, In, Tl, Ge, P, As, Sb, Bi, S, Se, Te, Po, and combinations thereof. In addition, at least one thereof and $SiO_2$ may be mixed and used.

The content of the negative electrode active material in the negative electrode mixture layer may be 94 to 98% by weight based on the total weight of the dry negative electrode composition.

On the other hand, when an electrode to be manufactured is a positive electrode, a compound (lithiated intercalation compound) capable of reversibly intercalating and deintercalating lithium may be used as the positive electrode active material. In detail, at least one of composite oxides of lithium and a metal selected from cobalt, manganese, nickel, and combinations thereof may be used.

A more detailed example may be a lithium transition metal compound (oxide) having a layered structure, represented by the general formula $LiMO_2$, wherein M includes at least one of transition metal elements such as Ni, Co, and Mn, and may further include other metal elements or non-metal elements. As the complex oxide, for example, a monolithic lithium transition metal composite oxide containing one type of the transition metal element, a so-called binary lithium transition metal composite oxide containing two types of transition metal elements, and a ternary lithium transition metal composite oxide containing Ni, Co and Mn as transition metal elements and constituent elements may be used. In detail, $Li_xMn_{1-y}M_yA_2$, $Li_xMn_{1-y}M_yO_{2-z}X_z$, $Li_xMn_2O_{4-z}X_z$, $Li_xMn_{2-y}M_yM'_zA_4$, $Li_xCo_{1-y}M_yA_2$, $Li_xCo_{1-y}M_yO_{2-z}X_z$, $Li_xNi_{1-y}M_yA_2$, $Li_xNi_{1-y}M_yO_{2-z}X_z$, $Li_xNi_{1-y}Co_yO_{2-z}X_z$, $Li_xNi_{1-y-z}Co_yM_zA_\alpha$, $Li_xNi_{1-y-z}Co_yM_zO_{2-\alpha}X_\alpha$, $Li_xNi_{1-y-z}Mn_yM_zA_\alpha$, and

$Li_xNi_{1-y-z}Mn_yM_zO_{2-\alpha}X$ may be used. In the above respective formulas, $0.9 \leq x \leq 1.1$, $0 \leq y \leq 0.5$, $0 \leq z \leq 0.5$, $0 \leq \alpha \leq 2$, M and M' are the same or different and are selected from the group consisting of Mg, Al, Co, K, Na, Ca, Si, Ti, Sn, V, Ge, Ga, B, As, Zr, Mn, Cr, Fe, Sr, V and rare earth elements, A is selected from the group consisting of O, F, S and P, and X is selected from the group consisting of F, S and P. For example, a ternary lithium transition metal composite oxide such as Li $(Ni_{1/3}Co_{1/3}Mn_{1/3})$ $O_2$ may be provided.

In addition, in a lithium transition metal compound (oxide) represented by the general formula $Li_2MO_3$, M includes at least one of transition metal elements such as Mn, Fe, and Co, and may further contain other metal elements or non-metal elements. For example, $Li_2MnO_3$, $Li_2PtO_3$, or the like may be provided.

In addition, the positive electrode active material may be a solid solution of $LiMO_2$ and $Li_2MO_3$, and for example, may be a solid solution represented by $0.5LiNiMnCoO_2-0.5Li_2MnO_3$.

Furthermore, a coating layer on the surface of the positive electrode active material may be used, or a mixture of the compound and a compound having a coating layer may be used. The coating layer may include at least one coating element compound selected from the group consisting of oxides, hydroxides, oxyhydroxides, oxycarbonates, and hydroxycarbonates of coating elements. Compounds constituting these coating layers may be amorphous or crystalline. As the coating element included in the coating layer, Mg, Al, Co, K, Na, Ca, Si, Ti, V, Sn, Ge, Ga, B, As, Zr, or mixtures thereof may be used.

In the positive electrode, the positive electrode active material may be 90 to 98% by weight based on the total amount of the dry positive electrode composition.

The dry electrode composition includes a binder. Examples of the binder may include polytetrafluoroethylene, polyethylene oxide, polyvinylpyrrolidone, polyvinyl alcohol, and cellulose derivatives. The binder as described above may be particles in which fine fibers are aggregated forming a fiber bundle, and may be formed as fine fibers as the fibers constituting the fiber bundle are released into fine fibers by applying predetermined heat and pressure.

The binder may be included in an amount of 1 to 5% by weight based on the dry electrode composition. For example, the binder may be included in an amount of 1% by weight or more, 1.5% by weight or more, or 2% by weight or more, and may be included in an amount of 5% by weight or less, 4.5% by weight or less, or 4% by weight or less. If the content of the binder is less than 1% by weight, there is a problem of insufficient binding force between active materials, and if it exceeds 5% by weight, there is a problem of excessive increase in electrode resistance.

In addition to the fiber bundle-phase binder, a particulate-phase binder may be further included. As the particulate-phase binder, a binder commonly used in electrode manufacturing may be used, but the present disclosure is not particularly limited. For example, at least one selected from the group consisting of polyvinylidene fluoride, polyvinylidene fluoride-hexafluoropropylene, polyvinylidene fluoride-trichloroethylene, polymethylmethacrylate, polyacrylonitrile, polyvinylpyrrolidone, polyvinyl acetate, ethylene-vinyl acetate copolymer, cyanoethyl pullulan, and pullulan may be used.

The dry electrode composition may further include a conductive material to improve conductivity, if necessary. The conductive material may be used without limitation as long as it is commonly used in secondary batteries. For example, the conductive material may be at least one selected from the group consisting of graphite such as natural graphite or artificial graphite, carbon-based materials such as carbon black, acetylene black, ketjen black, carbon fiber carbon nanotubes or the like, metallic materials such as metal powder or metal fibers such as copper, nickel, aluminum, silver, or the like, and conductive polymers such as conductive oxides or polyphenylene derivatives. The conductive agent is not limited thereto, but may be included in an amount of, for example, 0.5 to 3% by weight based on the total electrode composition.

A dry electrode composition manufacturing method according to an embodiment may include mixing a dry electrode composition including an electrode active material and a binder, as described above. As a result, the electrode active material, the binder, and the conductive material added as needed may be evenly distributed.

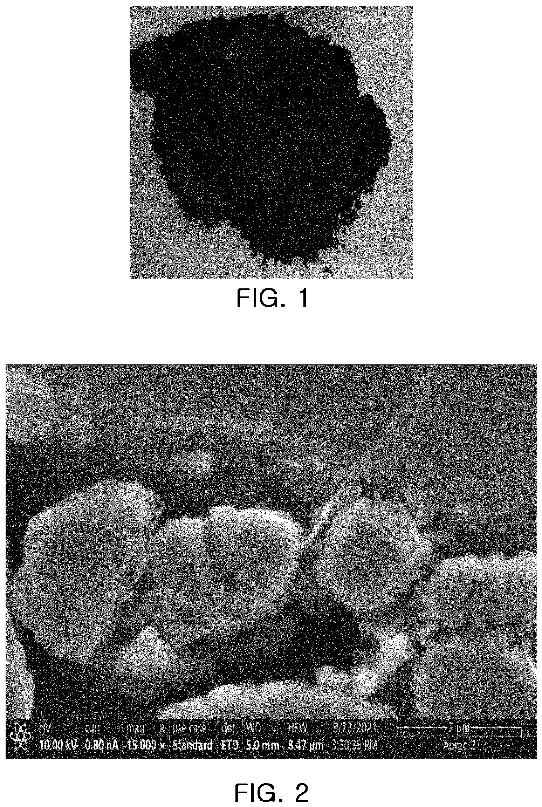

The mixing is not particularly limited, and may be applied in this embodiment as long as it is mixing solid powder. For example, a blender, mixer, or the like may be used, and the mixing conditions are not particularly limited as long as powder included in the dry electrode composition may be mixed thereby. As an example of the dry electrode composition prepared by the above method, a photograph of a dry positive electrode composition obtained by mixing an electrode active material, a binder, and a conductive material in a blender is illustrated in FIG. 1. On the other hand, as illustrated in FIG. 2, the binder included in the electrode mixture of FIG. 1 has a particulate phase.

According to an embodiment, kneading an electrode composition in which the electrode active material and the binder are mixed is included. By the kneading, the binder included in the dry electrode composition may be fibrous. In an embodiment, the electrode manufacturing method is to prepare an electrode sheet by a dry method using a dry electrode composition in powder phase without containing a solvent, and as the binder becomes fibrous, the electrode active material and the conductive material added as necessary may be bonded.

The fiberization of the binder is performed by applying shear pressure while applying heat to the binder, so that the binder forming a bundle by aggregating fine fibers is released into fine fibers, thereby forming a fibrous phase in which for example, the length may vary and the diameter may be 100 nm or less. The electrode active material may be bound by this fine fibrous-phase binder. Furthermore, the fine fibrous binder may improve the tensile strength of the electrode sheet, so that the sheet shape may be maintained without a current collector, and the number of subsequent calendering may be reduced.

The kneading may be performed using equipment that may provide heat and shear stress, and for example, a screw-type kneader provided by KM Tech may be used.

The kneading may be performed while applying heat of 50°C or higher. At a temperature of less than 50°C, the fiberization of the binder may not be sufficient, and therefore, the binding force of the electrode active material may not be sufficient and the sheet shape may not be maintained. The kneading is not particularly limited, but the upper limit of the temperature is not particularly limited as long as heat at a temperature lower than the temperature at which thermal decomposition of the binder occurs is applied. For example, the applied heat may be 200°C or less. In detail, the heat may be 200°C or less, 180°C or less, 150°C or less, or 120°C or less.

In the case of using the screw-type kneader in the kneading, the screw may be rotated at a speed of 20 to 50 rpm for fiberization of the binder. If the rotation of the screw is less than 20 rpm, sufficient shear pressure may not be provided, so that the binder may not be sufficiently fibrous, and if it exceeds 50 rpm, the active material may be deformed due to excessive shear pressure.

The kneading may be performed for 1 to 10 minutes. If the kneading time is less than 1 minute, fiberization of the binder may not occur sufficiently, which may result in insufficient binding between electrode active materials, and if the kneading time exceeds 10 minutes, a rapid increase in equipment pressure due to excessive fiberization may occur.

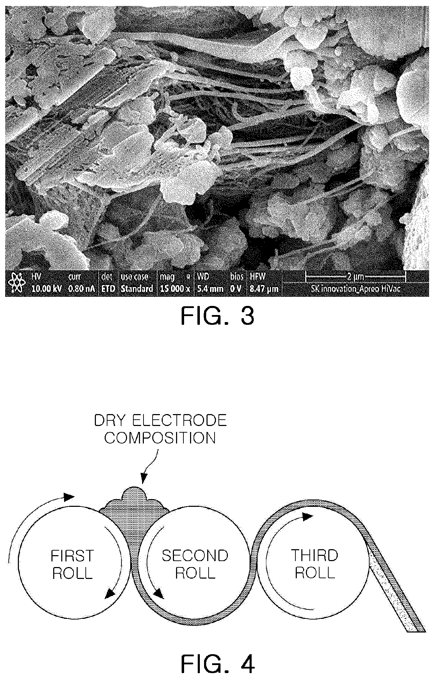

It can be seen from FIG. 3 that the binder is fibrous by the kneading. FIG. 3 is an image of powder obtained after kneading a dry electrode composition containing a positive electrode active material as an electrode active material and containing a conductive material and a fiberizable binder, captured with an electron microscope. As can be seen from FIG. 3, the binder of the particulate phase may be fibrous by kneading, and the fibrous-phase binder may be distributed on the surfaces of the electrode active material and the conductive material.

Next, an operation of calendering the dry electrode composition including the obtained fiberized binder may be included. The calendering is an operation of sheeting using the dry electrode composition containing the fibrous binder, and an electrode sheet may be manufactured from the electrode composition.

The calendaring operation may be performed by a calender roll including two or more rotating rolls with respect to the dry electrode composition including the fibrous binder. In detail, the electrode composition may be produced in a sheet form by injecting the dry electrode composition containing the fibrous binder between two rolls spaced apart at a predetermined interval and applying pressure thereto by the roll and the roll.

The calender rolls may include two or more rolls, and in detail, may be comprised of two or three rolls, and may be comprised of more rolls. Therefore, as an example, calendering may be performed by the first roll and the second roll, and then calendering may be performed by the second roll and the third roll. This is schematically illustrated in FIG. 4. As illustrated in FIG. 4, a dry electrode composition containing a fibrous binder is introduced between the first and second rolls to prepare a sheet-shaped first electrode sheet, and then, the obtained first electrode sheet may be introduced between the second roll and the third roll, thereby manufacturing the electrode sheet.

Furthermore, although not illustrated in the drawings, in this case, calendering may be performed by a pair of rolls comprised of two rolls and another pair of rolls comprised of the other two rolls. In detail, calendering may be performed by a pair of calender rolls comprised of a first roll and a second roll and another pair of calendering rolls comprised of a third roll and a fourth roll. For example, a dry electrode composition is injected between a pair of calender rolls comprised of the first roll and the second roll to prepare a sheet-shaped first electrode sheet, and the prepared first electrode sheet is injected between another pair of calendering rolls comprised of the third roll and the fourth roll, to be undergone calendaring, thereby manufacturing an electrode sheet.

A dry electrode manufacturing method according to an embodiment is to prepare an electrode sheet using powder containing an electrode active material and a binder without using a solvent, and by applying heat and pressure such that electrode active materials are bound by the fibrous binder. In detail, the fibrous binder included in the dry electrode composition and attached to the surface of particles such as electrode active material and conductive material is softened by heat, and is bound to adjacent electrode active materials by pressure provided during the calendering process, thereby maintaining the sheet shape even without a separate support such as a current collector.

The heat may be provided by heating respective rolls constituting the calender roll to a predetermined temperature range. The heating temperature of the roll may be 40°C or higher, but is not limited thereto. If the temperature of the roll is less than 40°C, the fibrous binder may not provide sufficient tensile strength to the electrode sheet due to insufficient binding force with powders such as electrode active materials and conductive materials. Meanwhile, as long as the temperature of the calender roll does not cause thermal decomposition of the fibrous binder, the upper limit of the temperature is not particularly limited. In detail, the roll may be heated to a temperature of 200°C or less, and in more detail, may be 200°C or less in terms of preventing the binder from adhering to the surface of the roll.

The roll and the roll may be spaced apart at predetermined intervals . The distance between the rolls may be, but is not limited to, 100 to 500 pm, and in detail, may be 100 $\mu$m or more, 150 $\mu$m or more, 200 $\mu$m or more, or 250 $\mu$m or more, and may be 500 $\mu$m or less, 450 $\mu$m or less, or 300 $\mu$m or less. If the gap between rolls is less than 100 pm, excessive pressure may cause electrode rolling and excessive electrode density, and if greater than 500 pm, fiberization of the binder may not be sufficient due to insufficient pressure applied to the electrode sheet, and the binder concentration gradient in the thickness direction of the electrode may not be constant.

The calendering operation may be performed a plurality of times. For example, the operation of passing the electrode sheet obtained by passing between three rolls as illustrated in FIG. 4 again between the first and second rolls and then passing the same between the second and third rolls may be repeatedly performed a plurality of times. As a result, an electrode sheet having a required thickness may be obtained.

As another embodiment, the calendering may use a device comprised of, for example, 4 rolls. In detail, although not illustrated in the drawing, the operation of passing between the first and second rolls and then between the third and fourth rolls may be repeatedly performed a plurality of times. As a result, an electrode sheet having a required thickness may be obtained. In this case, for the first roll and the second roll, and the third roll and the fourth roll, the conditions for the first roll and the second roll, and the second roll and and the third roll when using a device comprised of three rolls may be applied.

The number of repetitions of the calendering is not particularly limited, and may be, for example, 3 or more, 4 or more, or 5 or more, and may be 20 or less, 15 or less, 12 or less, 10 or less, or 8 or less times. The tensile strength of the electrode sheet may be improved by such repeated calendering.

As described above, by performing the operation of kneading the dry electrode composition, the binder may be fibrous, and thereby the fibrous binder may bind the electrode active material and the conductive material constituting the electrode sheet, resulting in improving tensile strength of the electrode sheet obtained by the calendaring and reducing the number of times of the calendering operations of manufacturing the electrode sheet. In addition, by reducing the number of repetitions of the calendering, contamination of the rolls may be prevented, thereby significantly reducing costs of cleaning and replacing the rolls.

According to another embodiment, an electrode sheet having improved tensile strength is provided by converting the binder into fibers through a kneading process . In an embodiment, the electrode sheet may include an electrode active material and a fibrous-phase binder, and may have a tensile strength of 0.50 N/mm$^2$ or more, 0.65 N/mm2 or more, or 0.85 N/mm$^2$ or more. If the tensile strength of the electrode sheet is less than 0.50 N/mm$^2$, it may be difficult to maintain the sheet shape of the electrode sheet, such as occurrence of cracks or breakage in the electrode sheet.

The electrode sheet manufactured according to this embodiment is not particularly limited, but may have an electrode density of 2.0 g/cc or more. For example, the electrode density of the electrode sheet may be 2.1 g/cc or more, 2.2 g/cc or more, 2.3 g/cc or more, 2.4 g/cc or more, 2.5 g/cc or more, 2.6 g/cc or more, 2.7 g/cc or more, or 2.8 g/cc or more.

Although not particularly limited, the electrode sheet may have a thickness of 100 to 500 $\mu$m. If the thickness of the electrode sheet is less than 100 pm, the tensile strength of the electrode sheet may be insufficient and breakage may occur, and if the thickness exceeds 500 pm, the composition components constituting the electrode in the electrode sheet may be non-uniformly mixed in the thickness direction. For example, the thickness of the electrode sheet may be 150 $\mu$m or more, 200 $\mu$m or more, or 250 $\mu$m or more, and may be 45 $\mu$m or less, or 400 $\mu$m or less.

In addition, according to another embodiment, an electrode including the dry electrode sheet described above is provided. In detail, the electrode may be manufactured by locating the dry electrode sheet on at least one surface of an electrode current collector, heating and pressing the same.

The electrode current collector is not particularly limited as long as it does not cause chemical change in the battery and has high conductivity.

For example, when the electrode is a positive electrode, the electrode current collector is not particularly limited, but a thin plate formed of aluminum, stainless steel, or nickel may be used, and in more detail, a thin plate formed of aluminum may be used.

In addition, in the case of the negative electrode, for example, copper, stainless steel, aluminum, nickel, titanium, fired carbon, copper or stainless steel surface treated with carbon, nickel, titanium, silver, or the like, aluminum-cadmium alloy, or the like may be used.

The electrode current collector may be in various forms such as a film, sheet, foil, porous material, foam, nonwoven fabric, mesh shape, etc. In addition, fine irregularities may be formed on the surface to enhance bonding strength with the electrode sheet, and the surface may be coated with an oxidation-resistant metal or alloy film to prevent oxidation.

Furthermore, a secondary battery may be manufactured by using the electrode as a positive electrode or a negative electrode, or using the electrode as a positive electrode and a negative electrode. For example, a secondary battery may be manufactured by manufacturing an electrode assembly by sequentially stacking a positive electrode and a negative electrode with a separator as a boundary, accommodating the electrode assembly together with an electrolyte in a battery case and sealing the same. At this time, the battery case is not particularly limited, but may be a pouch-type case, and may be a prismatic or cylindrical metal case.

Furthermore, a secondary battery module may be constructed using the secondary battery according to an embodiment, and one or more of the modules may be packaged in a pack case, thereby forming a secondary battery pack.

The above-described secondary battery module and secondary battery pack including the same may be applied to various devices, and in detail, may be applied to various devices that may use a secondary battery module and a secondary battery pack including the same. It is not particularly limited, but the secondary battery module and the secondary battery pack including the same may be applied to transportation means such as, for example, electric bicycles, electric vehicles, hybrid vehicles and the like.

**Example**

Hereinafter, the present disclosure will be described in more detail through detailed examples. The following examples are merely examples to aid in an understanding of the present disclosure, and the scope of the present disclosure is not limited thereto.

**Example 1**

96.5% by weight of a positive electrode active material containing nickel, cobalt, and manganese in a weight ratio of 8:1:1, 0.5% by weight of carbon nanotube conductive material, and polytetrafluoroethylene (PTFE) binder of 3% by weight were mixed to prepare a dry positive electrode composition.

Then, the dry positive electrode composition was kneaded at 25 rpm for 3 minutes at 90°C using a screw-type kneader. The thus obtained dry positive electrode composition was observed with an electron microscope, and a photograph thereof is illustrated in FIG. 2. As can be seen from FIG. 2, it was found that the binder was fibrous.

As illustrated in FIG. 4, the dry positive electrode composition containing the fibrous binder is put between the first roll and the second roll of the calender roll in which three rolls of the first roll, the second roll, and the third roll are continuously positioned, thereby preparing a first positive electrode sheet, and subsequently, the first positive electrode sheet was continuously fed between the second roll and the third roll to prepare a positive electrode sheet.

At this time, the temperature of each roll was 50°C, and the gap between respective rolls was 100 μm.

The prepared positive electrode sheet was put into the calender roll again, and calendering was performed three more times (a total of four times).

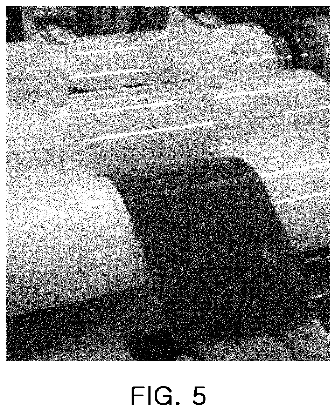

The positive electrode sheet thus obtained is illustrated in FIG. 5.

On the other hand, the thickness, density and tensile strength of the prepared positive electrode sheet were respectively measured by the following method, and the results are illustrated in Table 1.

**Density:** After cutting the electrode coating to a certain size (e.g. 1×1 cm$^2$), the weight (electrode loading) and thickness of both sides of the electrode were measured, respectively. The density of the electrode sheet was obtained using Equation 1 below.

$$\text{Density of electrode sheet} \left[\frac{g}{cc}\right] = \frac{2 \times \text{Electrode loading}[mg/cm^2]}{\text{Electrode thickness}[\mu m] - \text{Foil thickness}[\mu m]} \times 100$$

......... Equation (1)

**Tensile strength:** An electrode sheet with a width of 10 mm × length of 100 mm was manufactured and measured by pulling both ends of the specimen at a speed of 5 cm/min with Universal Testing Machine (UTM) equipment.

**Example 2**

A positive electrode sheet was prepared in the same manner as in Example 1, except that it was passed through a calender roll 8 times.

The thickness, density and tensile strength of the prepared positive electrode sheet were measured, and the results are illustrated in Table 1.

**Example 3**

A positive electrode sheet was prepared in the same manner as in Example 1, except that it was passed through a calender roll 15 times.

The thickness, density and tensile strength of the prepared positive electrode sheet were measured, and the results are illustrated in Table 1.

## Comparative Example 1

A positive electrode sheet was prepared in the same manner as in Example 1, except that the kneading operation was omitted.

The thickness, density and tensile strength of the prepared positive electrode sheet were measured, and the results are illustrated in Table 1.

## Comparative Example 2

A positive electrode sheet was prepared in the same manner as in Example 3, except that the kneading operation was omitted.

The thickness, density and tensile strength of the prepared positive electrode sheet were measured and the results are illustrated in Table 1.

[Table 1]

| Division | | Kneaded or not | Roll Temperature (°C) | Times of Calender ing (times) | Thicknes s (μm) | Density (g/cc) | Tensile Strength (N/mm$^2$) |
|---|---|---|---|---|---|---|---|
| Example | 1 | ○ | 50 | 4 | 327 | 2.82 | 0.53 |
| | 2 | ○ | 50 | 8 | 332 | 2.86 | 0.85 |
| | 3 | ○ | 50 | 15 | 340 | 2.76 | 0.87 |
| Comparat ive Example | 1 | X | 50 | 4 | 311 | 2.69 | 0.06 |
| | 2 | X | 50 | 15 | 340 | 2.72 | 0.84 |

As can be seen from Table 1, the tensile strength of the positive electrode sheet obtained in Example 1 in which kneading was performed was significantly increased as compared to the positive electrode sheet obtained in Comparative Example 1, and in addition, it can be seen that the tensile strength of the positive electrode sheet obtained in Example 3 in which kneading was performed was also increased compared to the positive electrode sheet obtained in Comparative Example 2.

On the other hand, the positive electrode sheet of Example 2 was calendered 8 times, and it can be confirmed that it has the same or higher tensile strength, compared to the positive electrode sheet of Comparative Example 2 in which calendering was performed 15 times.

In this manner, when an electrode sheet is manufactured after converting the binder into fibers by kneading, the tensile strength may be significantly improved, and an electrode sheet having relatively high tensile strength may be obtained even in the case in which the number of calendering processes is reduced.

As set forth above, in the method of manufacturing a dry electrode sheet for a secondary battery according to an embodiment, since a drying process of a solvent is not included, improved process efficiency may be obtained.

In addition, according to an embodiment, the number of passes through the calender roll may be reduced, thereby preventing contamination of the rolls and significantly reducing costs of cleaning and replacing the rolls.

In addition, the dry electrode sheet manufactured by the method of manufacturing a dry electrode sheet for a secondary battery according to an embodiment has improved tensile strength.

In addition, according to an embodiment, an electrode coating process and a drying process are not included, the process may be simplified and equipment investment costs may be reduced.

While example embodiments have been shown and described above, it will be apparent to those skilled in the art that modifications and variations could be made without departing from the scope of the present invention as defined by the appended claims.

## Claims

1. A method of manufacturing a dry electrode sheet for a secondary battery, the method comprising:

   providing a dry electrode composition including an electrode active material and a binder;
   kneading the dry electrode composition; and

manufacturing an electrode sheet by calendering the kneaded dry electrode composition.

2. The method of claim 1, wherein the binder is fibrous by the kneading.

3. The method of claim 1 or 2, wherein the kneading is performed by applying heat and shear pressure.

4. The method of any one of claims 1 to 3, wherein the kneading is performed under anyone of the following conditions, respectively alone or in combination:

> (i) the kneading is performed at a temperature of 30 to 200°C,
> (ii) the kneading is performed at a rotational speed of 20 to 50 rpm,
> and/or
> (iii) the kneading is performed for 1 to 10 minutes.

5. The method of any one of claims 1 to 4, wherein the binder is a particle phase of a fiber bundle in which fibers are agglomerated,

> and/or wherein the dry electrode composition further includes at least one selected from the group consisting of a conductive material and a particulate-phase binder;
> preferably wherein the binder is at least one selected from the group consisting of polytetrafluoroethylene, polyethylene oxide, polyvinylpyrrolidone, polyvinyl alcohol and cellulose derivatives.

6. The method of any one of claims 1 to 5, wherein the binder is 1 to 5% by weight based on 100% by weight of the dry electrode composition.

7. The method of any one of claims 1 to 6, wherein the dry electrode composition further includes at least one selected from the group consisting of a conductive material and a particulate-phase binder,

8. The method of any one of claims 1 to 7, wherein the calendering is performed by a calender roll at least including a first roll, a second roll, and a third roll, preferably wherein in the calendaring, a first electrode sheet is prepared by injecting the dry electrode composition between the first roll and the second roll, and a electrode sheet is manufactured by injecting the first electrode sheet between the second roll and the third roll.

9. The method of any one of claims 1 to 8, wherein the calendering is performed at a temperature of 50°C to 200°C.

10. The method of claim 8 or claim 9, wherein the first roll and the second roll, and the second roll and the third roll, have a gap of 100 to 500 $\mu$m between rolls.

11. The method of any one of claims 1 to 10, further comprising calendering the prepared electrode sheet, preferably wherein the further calendering is repeated 20 times or less.

12. A dry electrode sheet for a secondary battery manufactured by according to the manufacturing method of anyone of claims 1 to 11.

13. The dry electrode sheet of claim 12, wherein the electrode sheet has anyone of the following properties:

> (i) the electrode sheet has a tensile strength of 0.50 N/mm$^2$ or more,
> (ii) the electrode sheet has an electrode density of 2.0 g/cc or more, and/or
> (iii) the electrode sheet has a thickness of 100 to 500 $\mu$m.

14. An electrode for a secondary battery, comprising:

> a current collector; and
> a dry electrode sheet for a secondary battery according to claim 12 or 13, on the current collector,
> wherein the electrode sheet is a cathode or an anode.

15. A secondary battery, in which an electrode assembly including a positive electrode, a separator, and a negative electrode and an electrolyte solution are accommodated in a battery case and sealed, wherein at least one of the positive electrode and the negative electrode is the electrode of claim 14.

FIG. 1

FIG. 2

FIG. 3

DRY ELECTRODE
COMPOSITION

FIRST
ROLL

SECOND
ROLL

THIRD
ROLL

FIG. 4

FIG. 5

Europäisches
Patentamt

European
Patent Office

Office européen
des brevets

**EUROPEAN SEARCH REPORT**

Application Number

EP 23 17 4746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/086247 A1 (LG ENERGY SOLUTION LTD [KR]) 28 April 2022 (2022-04-28) * see EP 4 216 298 * & EP 4 216 298 A1 (LG ENERGY SOLUTION LTD [KR]) 26 July 2023 (2023-07-26) * paragraph [0001] * * paragraph [0013] * * paragraph [0023] * * paragraphs [0026] - [0029] * * paragraph [0033] * * paragraph [0106] * * paragraph [0151] * * paragraph [0162] * * claims 11, 18, 26 * ----- | 1-7,9, 11-15 | INV. H01M4/04 B29C43/24 H01M4/139 H01M4/62  ADD. H01M10/058 B02C19/00 B02C17/00 |
| X | AU 2020 328 890 A1 (BROADBIT BATTERIES OY) 24 March 2022 (2022-03-24) * page 28, lines 42-50 * * page 29, lines 1-16 * * page 26, lines 5-13 * * page 29, lines 18-41 * ----- | 1-12 | |
| A | EP 3 680 961 A1 (THE PROVOST FELLOWS SCHOLARS AND OTHER MEMBERS OF BOARD OF TRINITY COL) 15 July 2020 (2020-07-15) * paragraph [0044]; figure 7 * ----- | 13 | **TECHNICAL FIELDS SEARCHED (IPC)** H01M |

The present search report has been drawn up for all claims

| Place of search | Date of completion of the search | Examiner |
|---|---|---|
| Munich | 12 October 2023 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 4746

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2023

| Patent document cited in search report | | Publication date | Patent family member(s) | | Publication date |
|---|---|---|---|---|---|
| WO 2022086247 | A1 | 28-04-2022 | CN | 116529899 A | 01-08-2023 |
| | | | EP | 4216298 A1 | 26-07-2023 |
| | | | KR | 20220052852 A | 28-04-2022 |
| | | | WO | 2022086247 A1 | 28-04-2022 |
| AU 2020328890 | A1 | 24-03-2022 | AU | 2020328890 A1 | 24-03-2022 |
| | | | BR | 112022002616 A2 | 03-05-2022 |
| | | | CA | 3150814 A1 | 18-02-2021 |
| | | | CN | 114616696 A | 10-06-2022 |
| | | | EP | 4014264 A1 | 22-06-2022 |
| | | | FI | 20195677 A1 | 14-02-2021 |
| | | | IL | 290542 A | 01-04-2022 |
| | | | JP | 2022544392 A | 18-10-2022 |
| | | | KR | 20220049015 A | 20-04-2022 |
| | | | PE | 20220633 A1 | 27-04-2022 |
| | | | TW | 202121460 A | 01-06-2021 |
| | | | US | 2022293952 A1 | 15-09-2022 |
| | | | WO | 2021028619 A1 | 18-02-2021 |
| EP 3680961 | A1 | 15-07-2020 | EP | 3680961 A1 | 15-07-2020 |
| | | | EP | 3909087 A1 | 17-11-2021 |
| | | | US | 2023216058 A1 | 06-07-2023 |
| | | | WO | 2020144298 A1 | 16-07-2020 |

EPO FORM P0459

For more details about this annex : see Official Journal of the European Patent Office, No. 12/82